# EUROPEAN PATENT APPLICATION

(11) **EP 3 416 043 A1**
(43) Date of publication of application: **19.12.2018**
(21) Application number: 18157792.5
(22) Date of filing: 21.02.2018
(51) Int. Cl.: G06F 8/38, G06F 9/445

(54) **SERVER, METHOD FOR PROVIDING CUSTOMIZED APPLICATION USING SINGULAR INTEGRATION APPLICATION INCLUDING INTEGRATED MODULE AND PLUG-IN AND LAYOUT, AND RECORD MEDIA THEREFOR**

(30) Priority: 13.06.2017 KR 20170074479
(71) Applicant: Giga Korea Co., Ltd., Kwangju-si 61480 (KR)
(72) Inventor: KOWN, Oh Seok, 463-892 Gyeonggi-do (KR)
(74) Representative: Engelhard, Markus

(57) **Abstract**

Disclosed herein is a server for making a customized application using an integrated application, including a module library in which an integrated plugin and an integrated module have been constructed to provide a plugin and module forming an application requested by a customer company terminal, a layout editor configured to edit a layout within an application formed of the module library in response to a changed change event when the layout is changed in a user terminal to which the customer company terminal or the customer company distributes an application, a parameter database configured to store at least one parameter forming the layout editor and to perform control so that when the change event is generated in the layout editor, the at least one parameter corresponding to the change event is extracted and changed, a module dynamic loader configured to dynamically load the module library to which the changed at least one parameter has been applied in response to the customer company terminal or the user terminal, and a display engine configured to configure a screen of the application in real time using the loaded module library.

## Description

### 1. CROSS REFERENCE TO RELATED APPLICATION

The present application claims the benefit of Korean Patent Application No. 10-2017-0074479filed in the Korean Intellectual Property Office on, June 13, 2017 the entire contents of which are incorporated herein by reference.

### 2. BACKGROUND OF THE INVENTION

### 1. Technical Field

The present invention relates to a method of making a customized application and, more particularly, to a method of making a required application using an integrated plugin and module and also providing an application customized for the requirements of a user and a customer company.

### 2. Description of the Related Art

Recently, with the development of a program used in a smart terminal or a PC, various applications are developed. However, the possibility that a service specified for each member store can be provided is almost rare because several hundreds of customer companies or more are present and this makes it almost impossible to make or modify a customized application for each member store.

In this case, a method of providing a customized service includes a method of dynamically configuring an application. In relation to this method, Korean Patent Application Publication No. 2004-0001346 (January 07, 2004) discloses an application service by which a customer served with an application service can directly search for and select components and functions and which is dynamically assembled based on the component applications and functions.

When the components are dynamically assembled, information about the address of a corresponding service template stored in a template depository and components belonging to a service category and address information stored in the component depository must be configured and retained in a directory structure, and the components are assembled. Accordingly, the time taken to dynamically assemble the components and a loading time are increased, and network resources and computing resources used to dynamically assemble the components are also wasted.

### 3. SUMMARY OF THE INVENTION

An embodiment of the present invention provides a method of making a customized application, wherein an integrated plugin and an integrated module are constructed in a module library to provide a single integrated application, menus can be configured to maintain a basic frame, but to be customized for the characteristics of each member store in such a manner that each member store, customer company or user edits the layout according to the characteristics of each member store, a cost and computing resources for unnecessary module and plugin can be reduced because the unnecessary module and plugin are not purchased, and a loading time can be reduced and an application equipped with all of necessary functions can be used because only a module and plugin according to a frequently used function are installed in each terminal even without storing all of menus. Technical objects to be achieved by the present embodiment are not limited to the above object, and other technical objects may be present.

In accordance with an embodiment of the present invention, a server for making a customized application using an integrated application includes a module library in which an integrated plugin and an integrated module have been constructed to provide a plugin and module forming an application requested by a customer company terminal, a layout editor configured to edit a layout within an application formed of the module library in response to a changed change event when the layout is changed in a user terminal to which the customer company terminal or the customer company distributes an application, a parameter database configured to store at least one parameter forming the layout editor and to perform control so that when the change event is generated in the layout editor, the at least one parameter corresponding to the change event is extracted and changed, a module dynamic loader configured to dynamically load the module library to which the changed at least one parameter has been applied in response to the customer company terminal or the user terminal, and a display engine configured to configure a screen of the application in real time using the loaded module library.

In accordance with another embodiment of the present invention, a method of making a customized application executed in a server for making a customized application includes the steps of extracting a plugin and module forming an application requested by a customer company terminal from a module library in which an integrated plugin and an integrated module have been stored, registering the application formed of the extracted plugin and module with the module library as an application of the customer company terminal, extracting at least one parameter corresponding to editing from a parameter database if the registered module library is edited in the customer company terminal using a layout editor performing editing in a drag & drop manner, changing the extracted at least one parameter so that the parameter corresponds to the editing, dynamically loading the module to which the edited at least one parameter has been applied when access to the customer company terminal is generated, and configuring a screen in real time using the loaded module so that the screen is output by the customer company terminal.

### 4. BRIEF DESCRIPTION OF THE DRAWINGS

FIG. 1 is a configuration diagram for illustrating a system for making a customized application using an integrated application according to an embodiment of the present invention.
FIG. 2 is a configuration diagram for illustrating elements included in the system for making a customized application using an integrated application, which is shown in FIG. 1.
FIG. 3 is a diagram for illustrating an embodiment in which an application is made in a customized form and dynamically loaded in real time in a server for making a customized application according to an embodiment of the present invention.
FIG. 4 is a diagram for illustrating an embodiment in which a customer-tailored application is made and served in a single application form according to an embodiment of the present invention.
FIG. 5 is a diagram for illustrating an embodiment in which the same pages are differently configured in the system for making a customized application according to an embodiment of the present invention.
FIG. 6 is a diagram for illustrating an embodiment in which a customized application is customized in each of a customer company terminal and a user terminal according to an embodiment of the present invention.
FIG. 7 is a diagram for illustrating an embodiment in which a customized application is edited and dynamically loaded using a layout editor in a user terminal according to an embodiment of the present invention.

### 5. DETAILED DESCRIPTION

Hereinafter, embodiments of the present invention are described in detail with reference to the accompanying drawings so that a person having ordinary skill in the art to which the present invention pertains may easily practice the embodiments. However, the present invention may be modified in various different ways and is not limited to the embodiments described herein. Furthermore, in the drawings, in order to clarify a description of the present invention, a description of parts not related to the description is omitted, and similar reference numbers are used throughout the specification to refer to similar parts.

Throughout this specification, when it is described that one element is "connected" to the other element, the one element may be "directly connected" to the other element or may be "electrically connected" to the other element through a third element. Furthermore, when it is said that one element "includes" the other element, the word "include" will be understood to imply the inclusion of stated elements but not the exclusion of any other elements, unless explicitly described to the contrary, and should not be understood that they exclude the existence or possible addition of one or more other characteristics, numbers, steps, operations, elements, parts, or combinations of them in advance.

In the entire specification of this application, a term of a degree, such as "about" or "substantially", is used in a corresponding numerical value or used as a meaning close to the numerical value when unique manufacturing and an allowable error are presented in a described meaning, and is used to prevent an unconscientious infringer from illegally using disclosed contents including a numerical value illustrated as being accurate or absolute in order to help understanding of the present invention. In the entire specification of this application, the term, such as a "step of (performing or doing) ∼" or a "step of ~" does not mean a "step for ~."

In this specification the term "unit" includes a unit realized by hardware, a unit realized by software, and a unit realized by both software and hardware. Furthermore, a single unit may be realized using two or more pieces of hardware or two or more units may be realized using a piece of hardware.

In this specification, some of operations or functions described as being performed by a terminal, apparatus or device may be performed by a server connected to the corresponding terminal, apparatus or device. Likewise, some of operations or functions described as being performed by a server may be performed by a terminal, apparatus or device connected to the corresponding server.

In this specification, some of operations or functions described as mapping or matching with a terminal may be construed as the meaning that the unique number of a terminal, that is, the identifying data of a terminal, or personal ID information is mapped or matched.

Embodiments of the present invention are described in detail below with reference to the accompanying drawings.

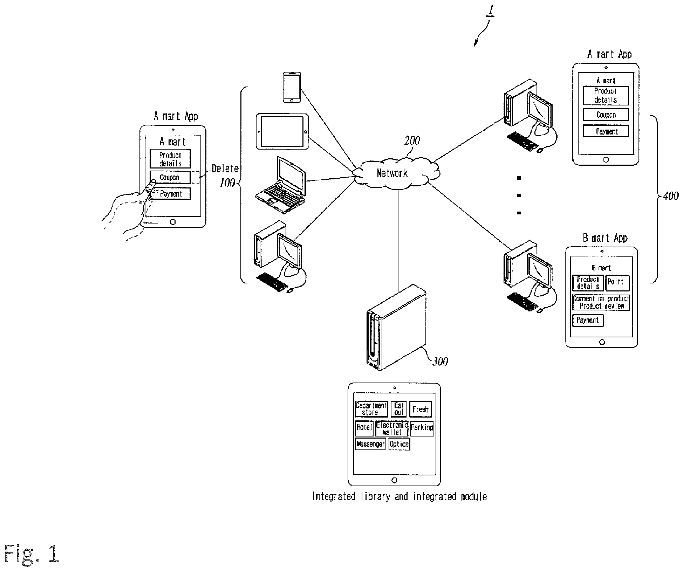

FIG. 1 is a configuration diagram for illustrating a system for making a customized application using an integrated application according to an embodiment of the present invention. Referring to FIG. 1, the system 1 for making a customized application using an integrated application may include a user terminal 100, a server 300 for making a customized application, and a customer company terminal 400. The system 1 for making a customized application of FIG. 1 is only an embodiment of the present invention, and the present invention is not limited to FIG. 1.

In general, the elements of FIG. 1 are connected over a network 200. For example, as shown in FIG. 1, the user terminal 100 may be connected to the server 300 for making a customized application 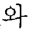 over the network 200. Furthermore, the user terminal 100 may be connected to the customer company terminal 400 directly or indirectly through the server 300 for making a customized application over the network 200. Furthermore, the customer company terminal 400 may be connected to the user terminal 100 through the server 300 for making a customized application.

In this case, the network 200 means a connection structure through which nodes, such as a plurality of terminals and servers, can exchange pieces of information. Examples of the network 200 include a 3rd Generation Partnership Project (3GPP) network, a Long Term Evolution (LTE) network, a 5rd Generation Partnership Project (5GPP) network, a World Interoperability for Microwave Access (WIMAX) network, the Internet, a Local Area Network (LAN), a Wireless Local Area Network (Wireless LAN), a Wide Area Network (WAN), a Personal Area Network (PAN), a Bluetooth network, an NFC network, a satellite broadcasting network, an analog broadcasting network, a Digital Multimedia Broadcasting (DMB) network and so on, but are not limited thereto.

The user terminal 100 may be a terminal that accesses a web page, an app page, a program or an application for using an application from the server 300 for making a customized application or the customer company terminal 400. Furthermore, the user terminal 100 may be a terminal for performing editing, such as removing or editing a menu located within an application and changing a layout. Furthermore, the user terminal 100 can download and use an application, but may be a terminal capable of storing only a frequently used module and plugin, using the module and plugin and dynamically configuring a screen in real time using the URL, that is, a numerical domain.

The user terminal 100 may be implemented using a computer capable of accessing a remote server or terminal over the network 200. In this case, the computer may include a set-top box or a notebook, a desktop or a laptop on which a web browser has been mounted, for example. In this case, the user terminal 100 may be implemented using a terminal capable of accessing a remote server or terminal over the network 200. The user terminal 100 may be a wireless communication device that guarantees portability and mobility, and may include all types of handheld wireless communication devices, such as a navigator, a Personal Communication System (PCS), a Global System for Mobile communications (GSM), Personal Digital Cellular (PDC), a Personal Handyphone System (PHS), a Personal Digital Assistant (PDA), International Mobile Telecommunication (IMT)-2000, Code Division Multiple Access (CDMA)-2000, WCode Division Multiple Access (W-CDMA), Wireless Broadband Internet (Wibro), a terminal, a smartphone, a smartpad, and a tablet PC.

The server 300 for making a customized application may be a server that directly or indirectly provides an app page, a web page, an application or a program capable of providing a real-time response collection service. Furthermore, the server 300 for making a customized application may be a server in which a single application having an integrated plugin and integrated module for configuring the application stored therein is constructed in a library form. Furthermore, the server 300 for making a customized application may be a server capable of extracting a module and plugin for an application and storing the extracted module and plugin in a customer company library form if the customer company terminal 400 requests the corresponding application in which the same pages have been differently configured. Furthermore, the server 300 for making a customized application may be a server in which the customer company terminal 400 can directly change the layout of an application and can perform editing, such as deletion, change or addition, on a menu using a layout editor. Furthermore, the server 300 for making a customized application may be a server capable of extracting the parameter of an edited portion from a parameter database, dynamically configuring a module using the extracted parameter, generating a screen in real time, and enabling the screen to be output by the customer company terminal 400 when editing is generated. Furthermore, the server 300 for making a customized application may be a server capable of reducing a driving time when a module and plugin requested or frequently used by the user terminal 100 is loaded and used because some menus may be frequently used by the user terminal 100 in addition to the customer company terminal 400. Furthermore, the server 300 for making a customized application may be a server capable of extracting a changed parameter from the parameter database, loading the extracted parameter onto a module dynamic loader, configuring a screen in real time, and enabling the screen to be output by the user terminal 100 if there is a change, such as a change of a layout based on a menu frequently used or preferred by the user terminal 100. The server 300 may be accessed through a numerical domain URL using the user terminal 100 like the customer company terminal 400, or may not store an application. In such a case, the server 300 for making a customized application can reduce a loading time when a frequently used plugin and module is loaded and a screen is dynamically configured using the loaded plugin and module.

In this case, the server 300 for making a customized application maybe implemented using a computer capable of accessing a remote server or terminal over the network 200. In this case, the computer may include a notebook, a desktop or a laptop on which a web browser has been mounted, for example.

The customer company terminal 400 may be a company's terminal or personal terminal that requests the making of an application from the server 300 for making a customized application. Furthermore, the customer company terminal 400 may be a terminal capable of transmitting requirements to the server 300 for making a customized application and receiving a corresponding application from the server 300 or accessing an application in such a way as to access the customer company terminal 400 through the URL, that is, a numerical domain. Furthermore, the customer company terminal 400 may be a terminal capable of changing, editing or deleting the layout of an application or a menu in its way using the layout editor. In this case, like the user terminal 100, the customer company terminal 400 may be a terminal capable of reducing a loading time by loading a frequently used module or plugin onto the customer company terminal 400 when it accesses an application through the URL that is a numerical domain. Furthermore, if the customer company terminal 400 edits an application using the layout editor, when the server 300 for making a customized application extracts an edited parameter from the parameter database, loads the extracted parameter onto the module dynamic loader, and configures a screen using the loaded parameter in real time, the customer company terminal 400 may be a terminal capable of outputting a screen that is edited and configured in real time. Accordingly, the customer company terminal 400 and the user terminal 100 may have different screens and layouts other than the same screen and layout. If each of the customer company terminal 400 and the user terminal 100 is plural, the plurality of customer company terminals 400 and the plurality of user terminals 100 may have different screens and layouts. A single customer company terminal 400 may have different screens and layouts in real time depending on that how configuration is set in a customer company, so a dynamic application can be configured.

In this case, the customer company terminal 400 may be implemented using a computer capable of accessing a remote server or terminal over the network 200. In this case, the computer may include a POS terminal, a card terminal or a notebook, desktop or laptop on which a web browser has been mounted, for example. In this case, the customer company terminal 400 may be implemented using a terminal capable of accessing remote server or terminal over the network 200. The customer company terminal 400 may be a wireless communication device that guarantees portability and mobility, and may include all types of handheld wireless communication devices, such as a navigator, a Personal Communication System (PCS), Global System for Mobile communications (GSM), Personal Digital Cellular (PDC), a Personal Handyphone System (PHS), Personal Digital Assistant (PDA), International Mobile Telecommunication (IMT)-2000, Code Division Multiple Access (CDMA)-2000, WCode Division Multiple Access (W-CDMA), a Wireless Broadband Internet (Wibro) terminal, a smartphone, a smartpad, and a tablet PC.

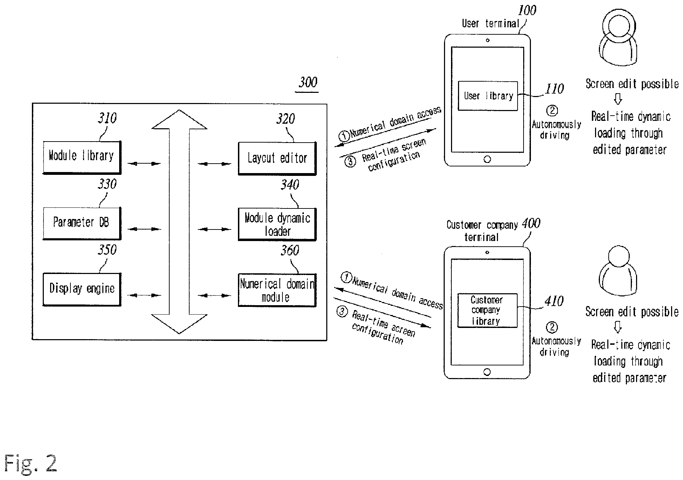

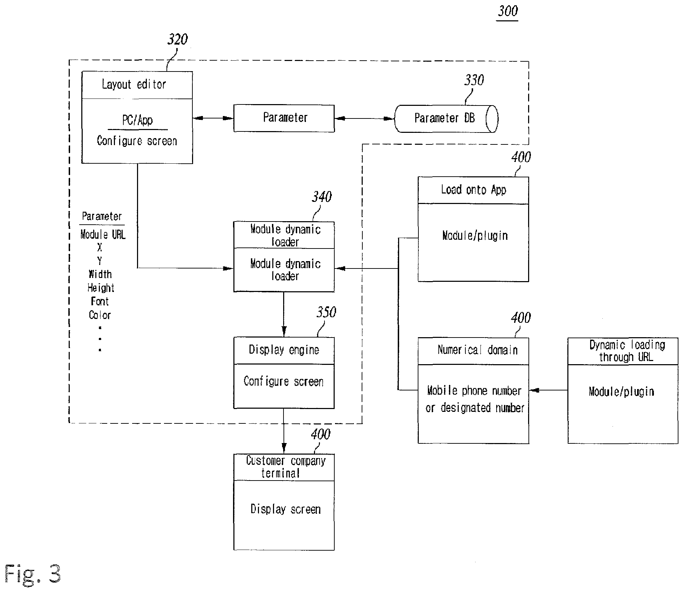

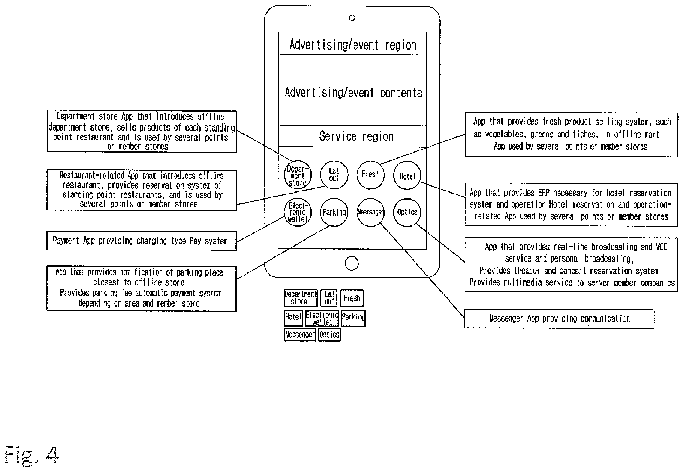

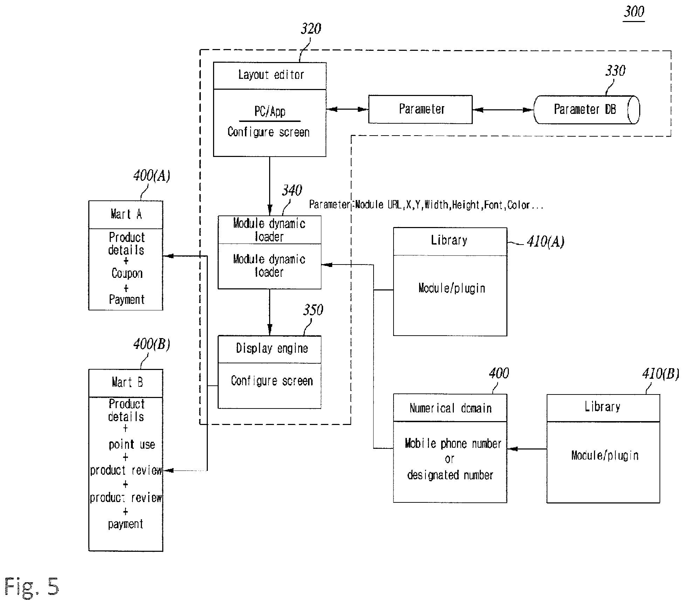

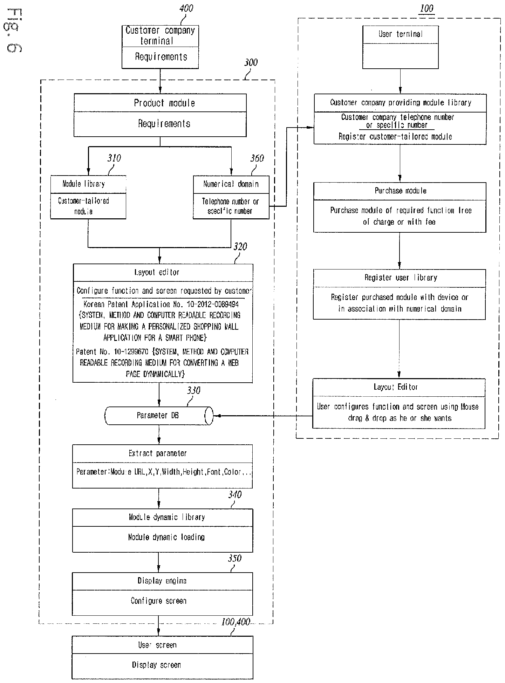

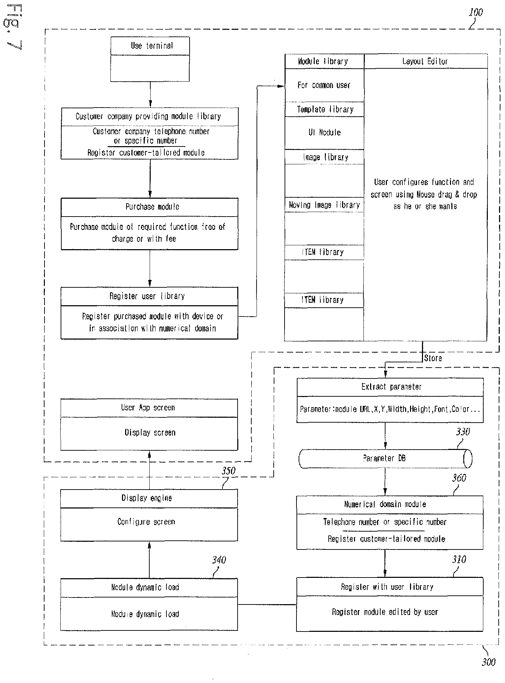

FIG. 2 is a configuration diagram for illustrating elements included in the system for making a customized application using an integrated application, which is shown in FIG. 1. FIG. 3 is a diagram for illustrating an embodiment in which an application is made in a customized form and dynamically loaded in real time in the server for making a customized application according to an embodiment of the present invention. FIG. 4 is a diagram for illustrating an embodiment in which a customer-tailored application is made and served in a single application form according to an embodiment of the present invention. FIG. 5 is a diagram for illustrating an embodiment in which the same pages are differently configured in the system for making a customized application according to an embodiment of the present invention. FIG. 6 is a diagram for illustrating an embodiment in which a customized application is customized in each of the customer company terminal and the user terminal according to an embodiment of the present invention. FIG. 7 is a diagram for illustrating an embodiment in which a customized application is edited and dynamically loaded using the layout editor in the user terminal according to an embodiment of the present invention.

Referring to FIG. 2, the server 300 for making a customized application according to an embodiment of the present invention may include a module library 310, a layout editor 320, a parameter database 330, a module dynamic loader 340, a display engine 350 and a numerical domain module 360.

When the server 300 for making a customized application according to an embodiment of the present invention or another server (not shown) operating in conjunction with the server 300 for making a customized application sends a real-time response collection service application, program, app page or web page to the user terminal 100, the user terminal 100 may install the real-time response collection service application, program, app page or web page and open it. Furthermore, a service program may be driven in the user terminal 100 using scripts executed in a web browser. In this case, the web browser is a program that enables a world wide web (WWW) service to be used, and means a program that receives hyper text written in the hyper text mark-up language (HTML) and displays the hyper text. The web browser includes Netscape, Explorer and Chrome, for example. Furthermore, the application means an application on the terminal and includes an app executed in a smartphone, for example.

In this case, a connection with the network 200 means that a communication object is generated at a communication contact point for communication with a terminal with which the user terminal 100, the server 300 for making a customized application or the customer company terminal 400 is connected over the network 200. The server 300 for maldng a customized application may exchange information through the communication object.

An integrated plugin and an integrated module may be constructed in the module library 310 so that a plugin and module forming an application requested by the customer company terminal 400 can be provided. In this case, a technology for making an application requested by the customer company terminal 400 in the module library 310 has been disclosed in Korean Patent No. 10-1397178 (May 19, 2014) of this applicant, and thus a detailed description thereof is omitted.

If a layout within an application configured by the module library 310 is changed by the user terminal 100, that is, an object to which the customer company terminal 400 or a customer company distributes the application, the layout editor 320 may edit the layout in response to a change event. In this case, the layout editor 320 may be an editor in which the customer company (e.g., a company or an operator) or a user (e.g., a company or a customer of an operator) can edit a required function and configure a screen. In this case, a detailed description of the layout editor 320 has been disclosed in Korean Patent No. 10-1511101 (April 13, 2015) and Korean Patent No. 10-1299670 (August 27, 2013), and thus the detailed description thereof is omitted.

The parameter database 330 stores at least one parameter forming the layout editor 320. When a change event is generated from the layout editor 320, the parameter database 330 may perform control so that at least one parameter corresponding to the change event is extracted and changed. That is, when a customer company or a user changes and edits a layout or a menu for customizing, the parameter database 330 is a database from which a parameter forming the object of the editing is extracted.

The module dynamic loader 340 may dynamically load the module library 310 to which a changed at least one parameter has been applied so that the module library 310 corresponds to the customer company terminal 400 or the user terminal 100. In this case, the module dynamic loader 340 dynamically loads a module in real time and starts to configure an application so that the layout or menu of the application is changed in response to a layout changed by a user or a customer company.

The display engine 350 may configure a screen of an application in real time using the loaded module library 310. Accordingly, although a user or a customer company changes an application in real time, the display engine 350 configures a screen by reconfiguring the application and dynamically loading a module in real time so that the user and the customer company can be provided with the application dynamically generated in real time.

The numerical domain module 360 may load a plugin and a module onto the customer company terminal 400 or the user terminal 100 through the URL whenever the plugin and a module is accessed. In this case, the concept of a numerical domain has been disclosed in Korean Patent No. 10-1444883 (September 26, 2014) of this application, and thus a detailed description thereof is omitted. Furthermore, the numerical domain may include an identifiable number or a telephone number.

In this case, if the customer company terminal 400 or the user terminal 100 uses an application through the numerical domain module 360, a plugin and a module may be loaded onto the customer company terminal 400 or the user terminal 100 if the plugin and module are used more than predetermined frequency as the results of the pattern analysis of the customer company terminal 400 or the user terminal 100. For example, it is assumed that a customer company uses an application for a menu A, but rarely uses or intermittently uses menus B to F. In this case, if all of the plugins and menus have been loaded onto the customer company terminal 400, it is the waste of memory. Furthermore, if all of the plugins and menus have not been loaded onto the customer company terminal 400, a lot of time is taken to dynamically load modules and to configure a screen. Accordingly, if a module and plugin regarding the menu A are stored in the customer company terminal 400, the time taken to dynamically configure the module can be minimized when the customer company terminal 400 is accessed through a numerical domain (if a stored application is not used or a menu is edited and a layout is changed in real time).

The layout editor 320 may edit a layout and user interface using drag & drop, which has been described in detail in the previously registered patents of this applicant.

Furthermore, a plugin and module of the customer company terminal 400 registered with the user terminal 100 through the customer company terminal 400 are stored in the user library 110 of the user terminal 100. In the user terminal 100, a screen may be reconfigured by the drag & drop of the user library 110 using the layout editor 320.

In this case, the user library 110 may include at least one of the module library 310 for a common user, a template library, an image library, a moving image library and an item library or at least one combination of them.

An operation of the system for making a customized application according to an embodiment of the present invention is as follows.

First, the server 300 for making a customized application may extract a plugin and module forming an application requested by the customer company terminal 400 from the module library 310 in which an integrated plugin and integrated module have been stored.

Thereafter, the server 300 for making a customized application may register the application formed of the extracted plugin and module with the module library 310 as the application of the customer company terminal 400.

Furthermore, if the module library 310 is edited by the customer company terminal 400 using the layout editor 320 using drag & drop, the server 300 for making a customized application may extract at least one parameter, corresponding to the editing, from the parameter database 330 and change the extracted at least one parameter so that it corresponds to the editing.

Accordingly, when the customer company terminal 400 is accessed, the server 300 for making a customized application may dynamically load a module to which the edited at least one parameter has been applied, may configure a screen in real time using the loaded module, and may enable the screen to be output by the customer company terminal 400.

In this case, the aforementioned process is a process for the customer company terminal 400 to edit a layout. However, as described above, the user terminal 100 may also change a menu or layout through the layout editor, and thus this is described below.

In this case, after the server 300 for making a customized application registers the application formed of the extracted plugin and module with the module library 310 as an application of the customer company terminal 400, when the user terminal 100 using the application of the customer company terminal 400 requests the module library 310, the server 300 for making a customized application may perform control so that the module library 310 is registered with the user library 110 of the user terminal 100 through the user terminal 100.

Thereafter, when the user terminal 100 edits the module registered with the user library 110 using the layout editor 320, the server 300 for making a customized application may extract at least one parameter corresponding to the editing from the parameter database 330 and change the extracted at least one parameter so that it corresponds to the editing.

Furthermore, when access to the user terminal 100 is generated, the server 300 for making a customized application may dynamically load the module to which the edited at least one parameter has been applied, may configure a screen in real time using the loaded module, and may enable the screen to be output by the user terminal 100.

In this case, whenever access to a numerical domain, that is, the URL of the customer company terminal 400 or the user terminal 100, is generated, the module library 310 and the user library 110 are loaded onto the customer company terminal 400 or the user terminal 100. A module used more than a predetermined number of times in the customer company terminal 400 or the user terminal 100 may be loaded onto the customer company terminal 400 or the user terminal 100.

An embodiment in which the method of making a customized application having the aforementioned configuration and operation according to an embodiment of the present invention is described below with reference to FIGS. 3 to 7.

Referring to FIG. 3, in the era in which the demands of a customer company have been diversified, a company that develops and serves an application separately develops a separate application suitable for the demands of a customer company. However, if many customer companies or customer members request customized services, the company cannot provide a customized service due to the problems of a cost and time. Accordingly, in the method of providing a customized application according to an embodiment of the present invention, various customer companies and users are provided with a customized service through a single application. Accordingly, a user can use a customized service at low costs, and a service company (i.e., customer company) can implement an application using the least development cost and time.

Accordingly, in the method of providing a customized application according to an embodiment of the present invention, a customer company configures an application suitable for requirements using the module library 310 in which an integrated module and an integrated plugin have been constructed. The layout editor 320 is provided so that a customer company or a user can configure a required screen. The customer company or the user dynamically loads the module and the plugin immediately and configures a required application. Accordingly, a customized application suitable for each customer company or user can be provided.

Referring to FIG. 4, in general, if applications functioning as respective portal sites are to provide an integrated service through a single application and a customer-tailored service is to be provided to each member store or member company, when a customizing demand is generated, each member company makes each application. However, such a method requires a cost and time and has a difficulty in terms of management. Accordingly, the method of providing a customized application according to an embodiment of the present invention can provide a customer-tailored application service suitable for the requirements of various customer companies through a single application.

Referring to FIG. 5, a customer company A requires "product details + coupon use for each product + payment" to be configured when a product detail screen is configured, and a customer company B requires "product details + point use + comment on product" and "product review + payment" to be configured when a product detail screen is configured.

This corresponds to a case where the customer company A and the customer company B want the same page to be differently configured. If the same page is requested to be differently configured as described above, a module and plugin suitable for each customer company may be produced, component information (i.e., parameters: x, y, width, height, color and font) of a module forming a corresponding page in a single common application may be extracted from the parameter database, a module or plugin suitable for a corresponding customer company may be dynamically loaded, and a screen may be configured in real time and provided to a user.

In this case, if the module or the plugin is dynamically loaded whenever it is executed, execution speed may be reduced. In order to solve this problem, user pattern analysis and a frequently used basic module are previously loaded onto a specific folder within the terminal (or device) of a customer company or a user. Accordingly, the requirements of many customer companies and users can be satisfied. A customer company or a user can directly configure the function and screen of a corresponding application in a drag & drop manner using the layout editor 320. Accordingly, the parties that provide service can satisfy the demands of a customer company at a low cost. Furthermore, a customer company can configure its own service using the layout editor 320 without the help of an expert. As a result, this is a win-win situation for both a customer company and an application making company.

Referring back to FIG. 4, a single application includes eight applications, and each of the eight applications must provide the portal and member service of each special field. Accordingly, a customized service for a customer is very important. Most of customer companies inevitably forgive customer-tailored service because each of 500 marts, for example, cannot make each application for a customized service. However, the method of providing a customized application according to an embodiment of the present invention can provide a customer-tailored service at a low cost.

Furthermore, for example, in the case of an ERP program, each function may be generated as a module, and a screen may be reconfigured using a corresponding module in a drag & drop manner depending on the authority of each department, team or employee. Accordingly, the ERP program can be used using only a function optimized for each user. For example, a financial management menu located in the first of a human resources department may be sent to back, and a personal matter performance menu necessary for the human resources department may be first located at the front or the financial management menu may be removed. The personal matter performance menu may be removed so that it is not seen in a general affairs department.

Furthermore, in general, a company that uses ERP wastes a cost because it has to purchase even a function that is not used. If the method of making a customized application according to an embodiment of the present invention is used, a cost according to the introduction of ERP can be significantly reduced because the ERP can be used by purchasing only a required function. In addition, a method of developing a program itself in the least module unit and configuring a UI using the layout editor can provide lots of advantages and convenience in terms of development, service, and customized service.

Referring to FIG. 6, the user terminal 100 can purchase and use only a module corresponding to a required function or can use the module free of charge. Furthermore, the customer company terminal 400 can produce only a required function in a customized type and can directly change and use a layout or a menu without the help of a programmer. Accordingly, the waste of memory, computing resources and network resources can be minimized.

Referring to FIG. 7, the user terminal 100 can edit a layout or menu through a module library for a common user, a template library (UI module), an image library, a moving image library and/or an item library.

The method of making a customized application according to an embodiment described with reference to FIGS. 1 to 7 may also be implemented in the form of a computer-readable recording medium including a computer-executable instruction, such as an application or program module executed by a computer. The computer-readable medium may be a specific available medium accessible to a computer, and it includes all of volatile and non-volatile media and separation type or non-separation type media. Furthermore, the computer-readable medium may include all of computer storage media. The computer storage media includes all of all of volatile and non-volatile media and separation type or non-separation type media implemented by a specific method or technology for storing information, such as a computer-readable instruction, data structure, program module or other data.

The method of making a customized application according to an embodiment of the present invention may be executed by an application (it may include a program, such as a platform or operating system installed in a terminal by default) installed in a terminal by default or may be executed by an application (i.e., program) directly installed in a master terminal by a user through an application store server or an application providing server, such as a web server related to the application or a corresponding service. In this sense, the method of making a customized application according to an embodiment of the present invention may be implemented in an application (i.e., program) installed in a terminal by default or directly installed by a user, and may be recorded on a recording medium readable by a computer, such as a terminal.

In accordance with the embodiments of the present invention, an integrated plugin and an integrated module are constructed in a module library to provide a single integrated application, and menus can be configured to maintain a basic frame, but to be customized for the characteristics of each member store in such a manner that each member store, customer company or user edits the layout according to the characteristics of each member store. Accordingly, a cost and computing resources for unnecessary module and plugin can be reduced because the unnecessary module and plugin are not purchased. Furthermore, a loading time can be reduced and an application equipped with all of necessary functions can be used because only a module and plugin according to a frequently used function are installed in each terminal even without storing all of menus.

The aforementioned description of the present invention is illustrative, and those skilled in the art to which the present invention pertains will understand that the present invention may be implemented in other detailed forms without departing from the technological spirit or essential characteristics of the present invention. Accordingly, the aforementioned embodiments should be construed as being only illustrative not as being restrictive from all aspects. For example, the elements described in the singular form may be distributed and implemented. Likewise, the elements illustrated as being distributed may also be implemented in a combined form.

The range of right of the present invention is defined by the appended claims rather than the detailed description, and the present invention should be construed as covering all modifications or variations derived from the meaning and scope of the appended claims and their equivalents.

## Claims

1. A server for making a customized application using an integrated application, the server comprising:
a module library in which an integrated plugin and an integrated module have been constructed to provide a plugin and module forming an application requested by a customer company terminal;
a layout editor configured to edit a layout within an application formed of the module library in response to a changed change event when the layout is changed in a user terminal to which the customer company terminal or the customer company distributes an application;
a parameter database configured to store at least one parameter forming the layout editor and to perform control so that when the change event is generated in the layout editor, the at least one parameter corresponding to the change event is extracted and changed;
a module dynamic loader configured to dynamically load the module library to which the changed at least one parameter has been applied in response to the customer company terminal or the user terminal; and
a display engine configured to configure a screen of the application in real time using the loaded module library.

2. The server of claim 1, further comprising a numerical domain module configured to load the plugin and the module onto the customer company terminal or the user terminal through a URL whenever the plugin and the module are accessed,
wherein when the customer company terminal or the user terminal uses the application through the numerical domain module, the plugin and the module are loaded onto the customer company terminal or the user terminal if the application is used more than predetermined frequency as a result of pattern analysis of the customer company terminal or the user terminal.

3. The server of claim 1, wherein the layout editor edits the layout and a user interface using drag & drop.

4. The server of claim 1, wherein:
the plugin and module of the customer company terminal registered with the user terminal through the customer company terminal are stored in a user library of the user terminal, and
the user terminal reconfigures the screen using the user library by a drag & drop of the layout editor.

5. The server of claim 4, wherein the user library comprises at least one of a module library for a common user, a template library, an image library, a moving image library and an item library or at least one combination of the module library for a common user, the template library, the image library, the moving image library and the item library.

6. The server of claim 2, wherein the numerical domain comprises an identifiable number or a telephone number.

7. A method of making a customized application executed in a server for making a customized application, the method comprising steps of:
extracting a plugin and module forming an application requested by a customer company terminal from a module library in which an integrated plugin and an integrated module have been stored;
registering the application formed of the extracted plugin and module with the module library as an application of the customer company terminal;
extracting at least one parameter corresponding to editing from a parameter database if the registered module library is edited in the customer company terminal using a layout editor performing editing in a drag & drop manner;
changing the extracted at least one parameter so that the parameter corresponds to the editing;
dynamically loading the module to which the edited at least one parameter has been applied when access to the customer company terminal is generated; and
configuring a screen in real time using the loaded module so that the screen is output by the customer company terminal.

8. The method of claim 7, further comprising steps of:
performing control so that the module library is registered with a user library of a user terminal through the user terminal when the module library is requested by the user terminal using the application of the customer company terminal after the application formed of the extracted plugin and module is registered with the module library the application of the customer company terminal;
extracting at least one parameter corresponding to editing from the parameter database when the module registered with the user library of the user terminal is edited using the layout editor;
changing the extracted at least one parameter so that the parameter corresponds to the editing;
dynamically loading the module to which the edited at least one parameter has been applied when access to the user terminal is generated; and
configuring the screen in real time using the loaded module so that the configured screen is output by the user terminal.

9. The method of claim 7, wherein:
the module library or the user library is loaded onto the customer company terminal or the user terminal whenever a numerical domain of URL access of the customer company terminal or the user terminal is accessed, and
a module used more than predetermined frequency in the customer company terminal or the user terminal is controlled so that the module is loaded onto the customer company terminal or the user terminal.

10. An application stored in a medium in order to execute a method according to any one of claims 7 to 9.
